# EUROPÄISCHE PATENTSCHRIFT

(11) **EP 2 306 145 B1**
(45) Veröffentlichungstag und Bekanntmachung des Hinweises auf die Patenterteilung: **02.11.2011**
(21) Anmeldenummer: 09012302.7
(22) Anmeldetag: 29.09.2009
(51) Int. Cl.: G01B 11/02, G01B 11/25, G01V 8/12

(54) **Optischer Sensor**
Optical sensor
Capteur optique

(43) Veröffentlichungstag der Anmeldung: 06.04.2011
(73) Patentinhaber: Leuze electronic GmbH + Co. KG, 73277 Owen/Teck (DE)
(72) Erfinder: Klaß, Dieter, 72636 Frickenhausen (DE); Weber, Jürgen-Ralf, 73061 Ebersbach (DE); Essig, Horst, 73230 Kirchheim/Teck (DE); Geiger, Fabian, 70771 Leinfelden-Echterdingen (DE)
(74) Vertreter: Ruckh, Rainer Gerhard

(56) Entgegenhaltungen:
- EP-A1- 1 612 509
- WO-A1-2008/107892
- DE-A1-102008 005 064
- US-A- 6 064 759
- US-A1- 2005 111 009
- US-B1- 7 375 826
- Micro-Epsilon: "Mehr Präzision. ScanControl 2700. Kompakter 2D/3D-Profilsensor mit integriertem Controller" Juli 2009 (2009-07), XP002573780 Gefunden im Internet: URL:http://www.micro-epsilon.com>

## Beschreibung

Die Erfindung betrifft einen optischen Sensor.

Optische Sensoren der in Rede stehenden Art werden insbesondere zur parallelen Erfassung mehrerer Objekte eingesetzt. Ein Beispiel hierfür ist die Erkennung einer Anzahl von in mehreren Spuren auf einem Förderband geförderter Objekte. Um diese Objekte simultan erfassen zu können, wird typischerweise eine der Zahl der Spuren des Förderbands entsprechende Anzahl von optischen Sensoren eingesetzt, mit welchen punktuell, das heißt lokal auf einer Spur, jeweils ein Objekt erfasst wird. Derartige optische Sensoren können als Lichttaster ausgebildet sein, die jeweils einen Sender aufweisen, der einen Lichtstrahl mit einem im Wesentlichen punktförmigen Strahlquerschnitt emittiert. Die einzelnen Sensoren sind zwar einfach und kostengünstig herstellbar. Wird jedoch eine Vielzahl einzelner Sensoren benötigt, steigt der Kostenaufwand sehr schnell an. Zudem ist nachteilig, dass bei Änderungen der jeweiligen Applikation alle Einzelsensoren neu eingestellt und parametriert werden müssen, was einen erheblichen Zeitaufwand mit sich bringt.

In der EP 0 892 280 B1 wird ein optischer Sensor vorgeschlagen, der eine aktive Beleuchtung und eine Lichtempfangseinheit in Form eines zeilen- oder matrixförmigen CCD-Arrays aufweist. Die Lichtempfangseinheit ist in mehrere Empfangszonen unterteilt, die jeweils einer Objektzone in einem Überwachungsbereich entsprechen. In jeder Empfangszone werden zur Objekterkennung Kontrastunterschiede detektiert.

Die US 7 375 826 B1 betrifft einen scannenden optischen Sensor, der als Sender Lasereinheiten aufweist, mit welchen Lichtlinien erzeugt werden. Dem Sender ist empfangsseitig ein Bildsensor zugeordnet. Durch die Scanbewegung des Laserlichts werden nacheinander unterschiedliche Bereiche abgetastet. In diesen Bereichen werden anhand von Intensitätswerten, die mit einer Auflösung von einer vorgegebenen Anzahl von Bits erfasst werden. Distanzwerte und damit Höhenprofile von Objekten ermittelt.

Die US 6 064 759 betrifft eine Vorrichtung zur Inspektion von Objekten, welche als Sender eine Lasereinheit aufweist, mit welcher eine Lichtlinie generiert wird. Als Empfänger ist eine Kamera vorgesehen. Mittels einer Schwerpunktberechnung werden innerhalb von Fenstern im Sichtbereich der Kamera jeweilige Auftreffpunkte der Lichtlinie auf der Kamera berechnet, um so ein dreidimensionales Höhenprofil eines Objektes zu erhalten.

Die WO 2008/107892 A1 betrifft ein optisches Sensorsystem zur Bestimmung der Kontur einer Objektoberfläche. Als Sendereinheit ist ein Array von Leuchtdioden vorgesehen, die eine Lichtlinie erzeugen, als Empfänger ist eine Zeilenkamera vorgesehen. Das zu detektierende Objekt wird auf einem Förderband durch den Erfassungsbereich des Sensorsystems bewegt, so dass es mit den Lichtlinien mehrmals nacheinander erfasst wird. Zur Elimination von Störeinflüssen wird die Sendereinheit abwechselnd aktiviert und deaktiviert, wodurch eine alternierende Folge heller und dunkler Streifen erhalten wird, die unterbrochen wird, wenn ein Objekt detektiert wird.

Die US 2005/0111009 A1 betrifft einen optischen Liniensensor zur Erfassung von Oberflächenprofilen eines Objekts. Die Positionen der von einer linienförmigen Lichtquelle auf einen Empfänger abgebildeten Lichtfläche, die ein Maß für die Objektdistanz bilden, werden durch ein Schwerpunktverfahren innerhalb von Fenstern berechnet.

Der Erfindung liegt die Aufgabe zugrunde, einen optischen Sensor mit erweiterter Funktionalität bereitzustellen.

Zur Lösung dieser Aufgabe sind die Merkmale des Anspruchs 1 vorgesehen. Vorteilhafte Ausfiährungsformen und zweekmäßige Weiterbildungen der Erfindung sind in den Unteransprüchen beschrieben.

Der erfindungsgemäße optische Sensor umfasst einen Lichtstrahlen emittierenden Sendeeinheit und einen Empfänger, welcher eine matrixförmige Anordnung von Empfangselementen aufweist. Die Projektion der Lichtstrahlen bildet auf einer zu detektierenden Objektstruktur eine Lichtlinie, die auf den Empfänger abgebildet wird. In einer Auswerteeinheit ist durch Auswertung der Empfangssignale der Empfangselemente nach dem Triangulationsprinzip ein Entfernungsprofil der Objektstruktur bestimmbar. In der Auswerteeinheit wird wenigstens ein Auswertefenster generiert, welches in einer Richtung einen längs der Lichtlinie verlaufenden Ortsbereich und in einer zweiten Richtung einen Entfernungsbereich umfasst. Durch Auswertung der Anzahl von in das Auswertefenster fallenden Objektpunkten wird eine binäre Zustandsinformation generiert.

Mit dem erfindungsgemäßen optischen Sensor kann durch die linienförmige Ausbildung der vom Sender emittierten Lichtstrahlen ein ausgedehnter Überwachungsbereich erfasst werden, wobei vorteilhaft ist, dass hierzu keine bewegten Teile für eine Ablenkung der Lichtstrahlen benötigt werden. Anstelle dessen generiert der Sender eine konstante Lichtlinie auf einer zu untersuchenden Objektstruktur. Somit können mit dem erfindungsgemäßen optischen Sensor simultan mehrere Objekte gleichzeitig erfasst werden.

Durch die nach dem Triangulationsprinzip erfolgende Entfernungsmessung werden Distanzinformationen über zu detektierende Objekte erhalten. Dadurch können Objekte ortsaufgelöst erfasst werden, wobei insbesondere Konturinformationen von Objekten erhalten werden können.

Durch die erfindungsgemäße Festlegung von einem oder mehreren Auswertefenstern können in diesen gezielt unterschiedliche Objekte oder Objektstrukturen erfasst werden. Dabei bilden die Auswertefenster bestimmte Ausschnitte aus dem Überwachungsbereich, wobei jedes Auswertefenster zudem einen definierten Distanzbereich umfasst. Durch Vorgabe dieses Distanzbereichs kann die Ortsauflösung bei der Objekterfassung im jeweiligen Auswertefenster gezielt vorgegeben werden, wodurch beispielsweise Objekte gezielt vor Hintergrundstrukturen erfassbar sind.

Mit der Generierung einer binären Zustandsinformation für jedes Auswertefenster wird für jedes Auswertefenster eine Aussage darüber erhalten, ob eine erwartete Objektstruktur oder ein erwartetes Objekt erkannt wird oder nicht. Mit dieser Auswertung erfolgt einerseits eine sichere und genaue Objektdetektion. Andererseits wird durch die Generierung der binären Zustandsinformationen aus einer Vielzahl von Objektpunkten eine Datenreduktion erhalten, so dass die Auswertung nur geringe Rechenzeiten beansprucht.

Besonders vorteilhaft hierbei ist, dass die Auswertung der Objektpunkte in einem Auswertefenster auf reine Zählvorgänge beschränkt ist, die einfach und schnell durchgeführt werden können.

Besonders vorteilhaft erfolgt die Auswertung von Objektpunkten innerhalb eines Auswertefensters derart, dass die binäre Zustandsinformation einen ersten Zustand "1" einnimmt, falls die Anzahl der in das Auswertefenster fallenden Objektpunkte größer als eine Einschaltanzahl ist, und dass die binären Zustandsinformationen einen zweiten Zustand "0" einnehmen, falls die Anzahl der in das Auswertefenster fallenden Objektpunkte kleiner als eine Ausschaltanzahl ist.

Die Einschaltanzahl und Ausschaltanzahl bilden dabei einstellbare Parameter. Durch die Wahl dieser Parameter ist auf einfache Weise eine applikationsspezifische Anpassung der Auswertung der Objektpunkte innerhalb eines Auswertefensters anpassbar. Besonders vorteilhaft kann durch eine geeignete Wahl der Einschaltanzahl und Ausschaltanzahl derart, dass die Einschaltanzahl größer als die Ausschaltanzahl ist, eine Schalthysterese beim Umschalten zwischen den Zuständen "0" und "1" generiert werden, durch welche ein sicheres Schaltverhalten zwischen den Zuständen erhalten wird.

Besonders vorteilhaft sind die Anzahl der Positionen und die Dimensionierungen von Auswertefenstern parametrierbar.

Somit kann durch eine Vorgabe der Auswertefenster der optische Sensor einfach und schnell an unterschiedliche Applikationen angepasst werden. Weiterhin kann durch eine geeignete Dimensionierung der Auswertefenster die Anzahl von Objektpunkten innerhalb eines Auswertefensters vorgegeben werden. Dadurch wird eine Verbesserung der Nachweisempfindlichkeit erhalten, da die Einstellung vorzugsweise derart erfolgt, dass eine erhöhte Toleranz gegen Spiegelungen, Abschattungen oder Kontrastfehler erhalten wird. Diese Parametrierung erfolgt zweckmäßig in einem dem Arbeitsbetrieb des optischen Sensors vorgeschalteten Einlernmodus.

Besonders vorteilhaft ist sogar eine Nachführung der Positionen der Auswertefenster, insbesondere bezogen auf eine bestimmte Referenzposition, möglich, so dass auch während des Arbeitsbetriebs eine Anpassung von Parametern des optischen Sensors an sich verändernde Randbedingungen möglich ist.

Im einfachsten Fall bilden die binären Zustandsinformationen von Auswertefenstern Ausgabegrößen.

Alternativ sind in der Auswerteeinheit logische Verknüpfungen von binären Zustandsinformationen einzelner Auswertefenster zur Generierung von Ausgangsgrößen durchführbar.

Bei dieser Art der Generierung von Ausgabegrößen können detaillierte Aussagen über komplexe Objektstrukturen getroffen werden. Dabei ist insbesondere vorteilhaft, dass unterschiedliche Einzelstrukturen von Objekten einzelnen Auswertefenstern zugeordnet werden können, wobei durch die Auswertung in den einzelnen Auswertefenstern schnell und einfach exakte Informationen über die Einzelstrukturen erhalten werden. Die Information über die Gesamtstruktur lässt sich dann durch die logischen Verknüpfungen der binären Zustandsinformation der Auswertefenster einfach und schnell ableiten.

Die Auswertung von Objektpunkten innerhalb eines Auswertefensters erfolgt im einfachsten Fall derart, dass die Anzahl von Objektpunkten innerhalb des Auswertefensters unabhängig von deren Relativlagen gewählt wird.

Alternativ werden innerhalb eines Auswertefensters nur aufeinanderfolgende Objektpunkte zur Bestimmung von Objektkonturen ausgewertet. Durch diese zusätzliche Restriktion bei der Auswertung innerhalb eines Auswertefensters werden somit gezielt nur Konturen von Objekten betrachtet.

Bei beiden Varianten können prinzipiell sofort für jede mit dem optischen Sensor durchgeführte Messung, das heißt für Bildaufnahmen im Empfänger, binäre Zustandsinformationen für die einzelnen Auswertefenster generiert werden und damit entsprechende Ausgangsgrößen.

Alternativ können zur Generierung einer binären Zustandsinformation für ein Auswertefenster mehrere aufeinanderfolgende Messungen herangezogen werden.

Durch die Heranziehung mehrerer Messungen zur Generierung von binären Zustandsinformationen und Ausgangsgrößen wird zwar die Schaltfrequenz des optischen Sensors reduziert, das heißt dessen Reaktionszeit erhöht. Jedoch wird dadurch auch die Nachweissicherheit des optischen Sensors erhöht.

Generell können innerhalb wenigstens eines Auswertefensters Messwertschwankungen erfassbar und in Abhängigkeit hiervon eine Fehler- oder Warnmeldung generierbar sein.

Die so generierten Fehler- und Warnmeldungen signalisieren, wenn die einzelnen Ausgabegrößen des optischen Sensors nicht mehr die geforderte Zuverlässigkeit aufweisen.

Die Auswertung für den optischen Sensor kann prinzipiell dahingehend erweitert werden, dass nicht nur Distanzinformationen, sondern auch Informationen von Kontrasten von Objekten gewonnen werden. Hierzu werden als zusätzliche Information durch eine Amplitudenbewertung von Empfangssignalen von Empfangselementen Remissionswerte für einzelne Objektpunkte bestimmt.

Besonders vorteilhaft ist die mit dem Sender durchgeführte Belichtung nur in Abhängigkeit der innerhalb des oder der Auswertefenster liegenden Empfangssignale der Empfangselemente gesteuert oder geregelt.

Damit erfolgt die Belichtungsanpassung gezielt nur in Abhängigkeit der für die Objektdetektion interessierenden, durch die Auswertefenster ausgewählten Bildteile des optischen Sensors.

Die Erfindung wird im Folgenden anhand der Zeichnungen erläutert. Es zeigen:
- Figur 1:: Schematische Darstellung eines Ausführungsbeispiels des erfin- dungsgemäßen optischen Sensors.
- Figur 2:: Draufsicht auf den Empfänger des optischen Sensors gemäß Figur 1.
- Figur 3:: Erste Variante einer Definition von Auswertefenstern bei einer Objektdetektion mit dem optischen Sensor gemäß Figur 1.
- Figur 4:: Zweite Variante einer Definition von Auswertefenstern bei einer Objektdetektion mit dem optischen Sensor gemäß Figur 1.
- Figur 5:: Definition von Auswertefenstern bei der Erfindung eines Behäl- ters mit dem optischen Sensor gemäß Figur 1.

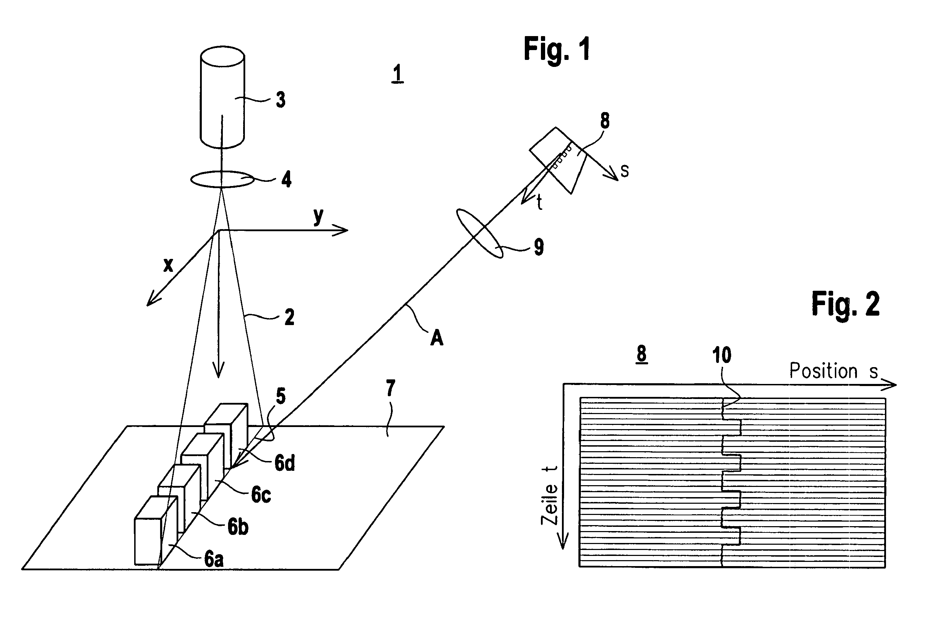

Figur 1 zeigt schematisch ein Ausführungsbeispiel des erfindungsgemäßen optischen Sensors 1. Der optische Sensor 1 bildet einen Lichtschnittsensor, bei welchem nach dem Triangulationsprinzip Entfernungsmessungen durchgeführt werden, wodurch eine positionsempfindliche Objektdetektion in einem Überwachungsbereich ermöglicht wird.

Der optische Sensor 1 weist eine Sendeeinheit bestehend aus einem Lichtstrahlen 2 emittierenden Sender 3 und einer diesem nachgeordneten Sendeoptik 4, auf. Der Sender 3 ist im vorliegenden Fall von einem Laser, insbesondere einer Laserdiode gebildet. Der Laser emittiert einen gebündelten Laserstrahl mit etwa kreisförmigem Strahlquerschnitt. Zur Ausbildung der in den Überwachungsbereich geführten Lichtstrahlen 2 dient die Sendeoptik 4, die als Aufweitungsoptik ausgebildet ist. Durch die Sendeoptik 4 werden aus dem Laserstrahl Lichtstrahlen 2 mit einem längs einer Geraden linienförmigen Strahlquerschnitt geformt, so dass auf der Oberfläche einer zu detektierenden Objektstruktur eine Lichtlinie 5 generiert wird.

Mit der so ausgebildeten Lichtlinie 5 können simultan mehrere Gegenstände erfasst werden. Bei dem Ausführungsbeispiel gemäß Figur 1 sind dies vier in separaten Spuren angeordnete Objekte 6a - 6d, die auf einem Förderband 7 gefördert werden. Die Förderrichtung des Förderbands 7 verläuft in y-Richtung. Die Objekte 6a - 6d sind in x-Richtung in Abstand nebeneinander angeordnet. Dementsprechend verläuft auch die Lichtlinie 5 des optischen Sensors 1 in x-Richtung, so dass die Objekte 6a - 6d simultan von den Lichtstrahlen 2 erfasst werden.

Der optische Sensor 1 weist weiterhin einen ortsauflösenden Empfänger 8 mit einer matrixförmigen, das heißt einer in Zeilen und Spalten gegliederten Anordnung von Empfangselementen auf. Der Empfänger 8 besteht dabei vorzugsweise aus einem CMOS- oder CCD-Array. Weiterhin ist dem Empfänger 8 eine Empfangsontik 9 zugeordnet, mittels derer von Objektstrukturen rückreflektierte Lichtstrahlen 2 auf den Empfänger 8 abgebildet werden.

Der Empfänger 8 ist in Abstand zum Sender 3 angeordnet. Zudem ist die optische Achse A des Empfängers 8 um einen Neigungswinkel bezüglich der in z-Richtung verlaufenden Strahlachse des Laserstrahls geneigt. In Figur 1 ist dabei die Zeilenrichtung des Empfängers 8 mit t bezeichnet, die Spaltenrichtung mit s. Die Zeilenrichtung t verläuft zumindest näherungsweise in x-Richtung.

Der optische Sensor 1, dessen Komponenten in einem nicht dargestellten Gehäuse integriert sind, weist weiterhin eine ebenfalls nicht dargestellte Auswerteeinheit auf, die von einem Mikroprozessor oder dergleichen gebildet ist. Die Auswerteeinheit dient einerseits zur Ansteuerung des Senders 3 und andererseits zur Auswertung der Empfangssignale der Empfangselemente des Empfängers 8.

Mit dem so ausgebildeten optischen Sensor 1 können Entfernungsprofile von Objektstrukturen ermittelt werden. Dies ist anhand von Figur 2 veranschaulicht, die eine Draufsicht auf den Empfänger 8 des optischen Sensors 1 zeigt, Die auf eine Objektstruktur geführte Lichtlinie 5 wird ortsaufgelöst auf den Empfänger 8 ausgebildet. Dies zeigt Figur 2 in Form einer Konturlinie 10 entsprechend der Objektstruktur in Figur 1, bestehend aus den vier Objekten 6a - 6d auf dem Förderband 7. Dabei definieren Positionen in Spaltenrichtung s die jeweiligen Höhenwerte. Bei bekannter Lage des Empfängers 8 relativ zum Sender 3 wird die Konturlinie 10 in ein Entfernungsprofil umgerechnet, das heißt in einzelne Höhenwerte z in Abhängigkeit der Position x in Längsrichtung der Lichtlinie 5.

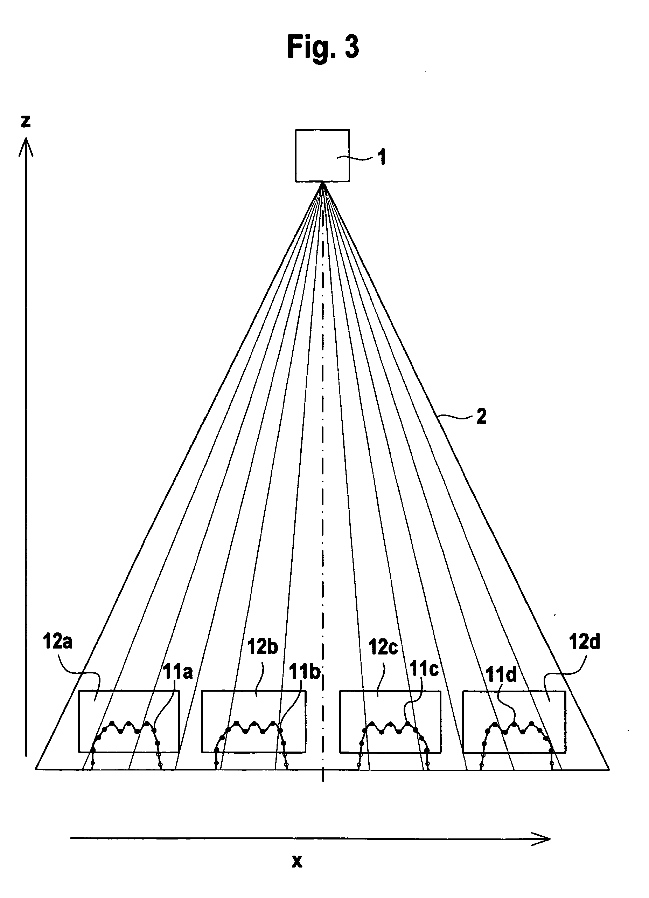

Figur 3 zeigt schematisch die so für die vier Objekte 6a - 6d ermittelten diskrete Folgen von Höhenlinierimesswerte, das heißt die Messwerte 11a - 11d für die vier Objekte 6a - 6d auf dem Förderband 7. Die dazwischen liegenden Messwerte stammen vom Förderband 7. Zur Veranschaulichung ist in dem Diagramm zusätzlich der von den Lichtstrahlen 2 des optischen Sensors 1 erfasste Bereich eingezeichnet.

Für die selektive Erkennung der Objekte 6a - 6d auf dem Förderband 7 werden in der Auswerteeinheit des optischen Sensors 1, wie in Figur 3 dargestellt, vier verschiedene Auswertefenster 12a - 12d definiert. Die Auswertefenster 12a - 12d umfassen einen jeweils definierten Ortsbereich in x-Richtung und einen definierten Entfernungsbereich in z-Richtung. Für jedes zu detektierende Objekt 6a - 6d ist dabei ein Auswertefenster 12a - 12d definiert, wobei dessen Position und Größe an die Position und Größe des jeweils zu detektierenden Objekts 12a - 12d angepasst ist. Im vorliegenden Fall werden auf dem Förderband 7 stets vier etwa gleich große Objekte 6a - 6d in vier Spuren in Abstand nebeneinander gefördert. Da die Objekte 6a - 6d durch die Lichtstrahlen 2 des Senders 3 schräg von oben beleuchtet werden, ergeben sich für die beiden links angeordneten Objekten 6a, 6b jeweils am linken Rand leichte Abschattungen und für die beiden rechts angeordneten Objekte 6c, 6d jeweils am rechten Rand leichte Abschattungen. Dadurch sind die Verteilungen der Messwerte 11a - 11d nicht völlig identisch. Trotzdem stimmen die für die Detektion der einzelnen Objekte 6a - 6d erwarteten Messwerte näherungsweise überein, so dass für die Detektion aller vier Objekte 6a - 6d identisch ausgebildete Auswertefenster 12a - 12d definiert werden, die, wie in Figur 3 dargestellt, in gleichen Abständen zueinander liegen.

Zur Detektion eines Objekts 6a - 6d wird in dem zugeordneten Auswertefenster 12a - 12d die Anzahl der Objektpunkte, das heißt die Anzahl der Messwerte 11 a - 11d, die an das Auswertefenster 12a - 12d fallen, gezählt. Dabei ist ein solcher Objektpunkt ein Ausgangssignal eines Empfangselements des Empfängers 8, das hinsichtlich seines Positions- und Entfernungswerts nach Umrechnung in z-x-Koordinaten innerhalb des Auswertefensters 12a - 12d liegt. Diese Anzahl wird mit einer Ausschaltanzahl und einer Einschaltanzahl verglichen, wodurch eine binäre Zustandsinformation generiert wird. Liegt die Zahl der Obiektounkte oberhalb der Einschaltanzahl, so nimmt die binäre Zustandsinformation den Zustand "1" ein, der im vorliegenden Fall dem Zustand "Objekt erkannt" entsnricht. Liegt die Zahl der Objektpunkte unterhalb der Ausschaltanzahl, so nimmt die binäre Zustandsinformation den Zustand "0" ein, der im vorliegenden Fall dem Zustand "Objekt nicht erkannt" entspricht. Zweckmäßigerweise wird eine Schalthysterese dadurch definiert, dass die Einschaltanzahl größer gewählt wird als die Ausschaltanzahl. Ist beispielsweise die binäre Zustandsinformation im Zustand "1", so wechselt diese nicht bereits dann in den Zustand "0", wenn die Anzahl der Objektpunkte unter die Einschaltanzahl sinkt. Vielmehr ist hierzu ein Absinken der Zahl des Objektpunktes unter die Ausschaltanzahl nötig. Entsprechendes gilt bei einem umgekehrten Zustandswechsel.

Bei der in Figur 3 dargestellten Situation wird in allen vier Auswertefenstern 12a - 12d ein Objekt 6a - 6d erkannt. Die entsprechenden Zustandsinformationen können unmittelbar als Ausgangsgrößen über Ausgänge oder Busschnittstellen ausgegeben werden. Alternativ können die binären Zustandsinformationen auch zu einer oder mehreren Ausgangsgrößen logisch verknüpft werden.

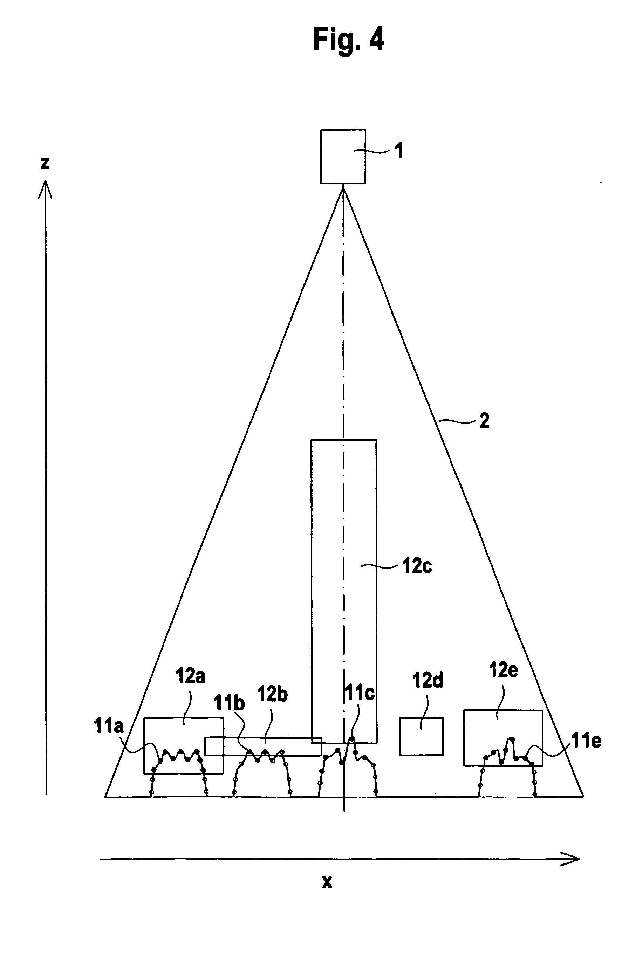

Der erfindungsgemäße optische Sensor 1 kann an sich ändernde Applikationsbedingungen schnell und einfach angepasst werden. Eine Anpassung an eine derart veränderte Applikation ist in Figur 4 dargestellt. In dieser Applikation werden anstelle von vier Objekten 6a - 6d nun fünf Objekte (die nicht gesondert dargestellt sind) in fünf neben einander liegenden Spuren auf dem Förderband 7 gefördert. Dabei können die Objekte auf der mittleren Spur innerhalb eines großen Höhenbereichs variieren, während das Objekt in der zweiten Spur von links eine gegenüber den anderen Objekten größere Breite aufweist.

Die Anpassung an die geänderte Applikation erfolgt durch eine Änderung der Positionen und Größen der Auswertefenster 12a - 12e und gegebenenfalls der jeweiligen Einschaltanzahl und/oder Ausschaltanzahl für ein Auswertefenster 12a -12e. Die veränderten Auswertefenster 12a - 12e zeigt Figur 4. Entsprechend der geänderten Messaufgabe, nämlich der Erkennung von fünf Objekten, sind nun fünf Auswertefenster 12a - 12e definiert. Entsprechend der erwarteten unterschiedlichen Größen der Objekte auf der mittleren Spur, erstreckt sich das Auswertefenster 12c über einen größeren Entfernungsbereich Z. Da auf der zweiten Spur weitere Objekte angeordnet sein können, weist das zugeordnete Auswertefenster 12b eine vergrößerte Ausdehnung in x-Richtung auf, so dass es mit den benachbarten Auswertefenstern 12a, c überlappt.

Wie aus Figur 4 ersichtlich, werden zwar auf den ersten drei und der fünften Spur Messwerte von Objekten registriert. Die entsprechenden Messwerte 11b, 11c für die Objekte der zweiten und dritten Spur liegen jedoch größtenteils außerhalb des jeweiligen Auswertefensters 12b, 12c, so dass in diesem Auswertefenster 12b, 12c jeweils eine unterhalb der Ausschaltanzahl liegende Zahl der Objektpunkte erhalten wird. Somit liefern die Auswertefenster 12b, 12c ebenso wie das Auswertefenster 12d, wo überhaupt keine Objektpunkte registriert wurden, die binäre Zustandsinformation "Objekt nicht erkannt". Demgegenüber wird für die Auswertefenster 12a, 12e die binäre Zustandsinformation "Objekt erkannt" erhalten.

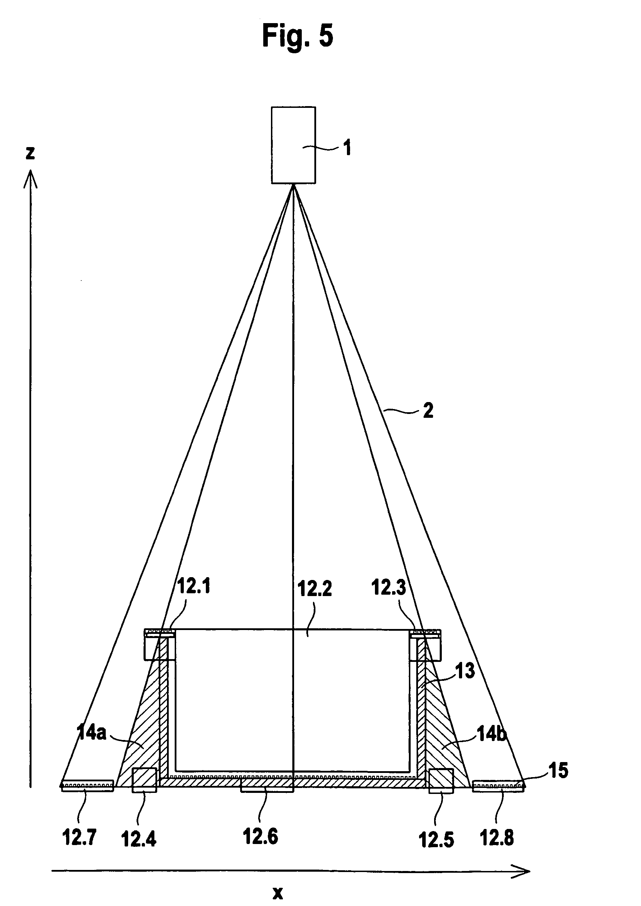

Figur 5 zeigt ein weiteres Anwendungsbeispiel für den optischen Sensor 1. In diesem Fall soll mit dem optischen Sensor 1 ein Behälter 13 sowie gegebenenfalls dessen Befüllung detektiert werden. Hierzu werden bevorzugt die Auswertefenster 12.1 und 12.3 definiert, die an die erwarteten Behälter-Oberkanten angepasst sind. Zudem wird das Auswertefenster 12.2 für den BehälterInnenraum definiert.

Ein Behälter 13 gilt dazu als erkannt, wenn in beiden Auswertefenstern 12.1 und 12.3 jeweils die Anzahl der Objektpunkte oberhalb der Einschaltanzahl liegt, das heißt wenn die logische Verknüpfung erfüllt ist, dass die binäre Zustandsinformation des Auswertefensters 12.1 und auch binäre Zustandsinformationen des Auswertefensters 12.3 im Zustand "1", das heißt "Objekt erkannt" ist. Dann wird die Ausgabegröße "Behälter erkannt" generiert.

Weiterhin wird die Ausgabegröße "Behälter voll" generiert, wenn die binäre Zustandsinformation des Auswertefensters 12.2 im Zustand "1", das heißt "Objekt erkannt" ist.

Die Auswertung kann dadurch noch verfeinert werden, wenn in den vom Behälter 13 abgeschatteten Bereichen 14a, 14b weitere Auswertefenster 12.4, 12.5 definiert werden.

Dann wird für eine Behältererkennung gefordert, dass in einer UND-Verknüpfung für die Auswertefenster 12.1, 12.3 jeweils die binäre Zustandsinformation = "1" und für die Auswertefenster 12.4, 12.5 die binäre Zustandsinformation = "0" vorliegt.

Weiter kann die Auswertung dahingehend erweitert werden, dass ein Auswertefenster 12.6 zur Abprüfung des Behälterbodens eingeführt wird. Auch dieses Auswertefenster 12.6 kann zur Auswertung des Vorhandenseins des Behälters 13 herangezogen werden, wobei mit dem abprüfbar ist, ob der Behälter 13 leer ist. Dies ist der Fall, wenn für das Auswertefenster 12.6 die binäre Zustandsinformation = "1" ist.

Schließlich kann mit den Auswertefenstern 12.7, 12.8 geprüft werden, ob die Auflage, auf welcher der Behälter 13 steht, beispielsweise ein Transportband 15, in seiner Sollposition liegt. Dies ist dann der Fall, wenn für die Auswertefenster 12.7, 12.8 jeweils die binäre Zustandsinformation = "1" erhalten wird. Verändert sich die Höhenlage der Auflage, so liegen in den Auswertefenstern 12.7, 12.8 nicht mehr genügend Objektpunkte, so dass dann für die Auswertefenster 12.7, 12.8 jeweils die binäre Zustandsinformation = "0" erhalten wird. Ist dies der Fall, wird im optischen Sensor 1 vorzugsweise ein Steuersignal zur Nachführung der anderen Auswertefenster 12.1 - 12.6 generiert, so dass deren Positionen auf die geäderte Höhenlage der Auflage angepasst wird.

### Bezugszeichenliste

- (1): Optischer Sensor
- (2): Lichtstrahlen
- (3): Sender
- (4): Sendeoptik
- (5): Lichtlinie
- (6a-6e): Objekt
- (7): Förderband
- (8): Empfänger
- (9): Empfangsoptik
- (10): Konturlinie
- (11a-11d): Messwert
- (12a-12e): Auswertefenster
- (12.1-12.8): Auswertefenster
- (13): Behälter
- (14a): Bereich
- (14b): Bereich
- (15): Transportband

## Patentansprüche

1. Optischer Sensor (1) mit einer Lichtstrahlen (2) emittierenden Sendeeinheit, mit einem Empfänger (8), welcher eine matrixförmige Anordnung von Empfangselementen aufweist, wobei die Projektion der Lichtstrahlen (2) auf einer zu detektierenden Objektstruktur eine Lichtlinie (5) bildet, die auf den Empfänger (8) abgebildet wird, und mit einer Auswerteeinheit, in welcher durch Auswertung der Empfangssignale der Empfangselemente nach dem Triangulationsprinzip ein Entfernungsprofil der Objektstruktur, das heißt einzelne Höhenwerte z in Abhängigkeit der Position x in Längsrichtung der Lichtlinie (5), bestimmbar ist, **dadurch gekennzeichnet, dass** in der Auswerteeinheit wenigstens ein Auswertefenster (12a) generiert wird, welches in einer Richtung einen längs der Lichtlinie (5) verlaufenden Ortsbereich in x-Richtung und in einer zweiten Richtung einen Entfernungsbereich in z-Richtung umfasst, und wobei durch Auswertung der Anzahl von in das Auswertefenster (12a) fallenden Objektpunkten eine binäre Zustandsinformation generiert wird.

2. Optischer Sensor nach Anspruch 1, wobei die binäre Zustandsinformation einen ersten Zustand "1" einnimmt, falls die Anzahl der in das Auswertefenster (12a - 12e) fallenden Objektpunkte größer als eine Einschaltanzahl ist, und dass die binäre Zustandsinformation einen zweiten Zustand "0" einnimmt, falls die Anzahl der in das Auswertefenster (12a - 12e) fallenden Objektpunkte kleiner als eine Ausschaltanzahl ist.

3. Optischer Sensor nach Anspruch 2, wobei die Einschaltanzahl und die Ausschaltanzahl einstellbare Parameterwerte bilden.

4. Optischer Sensor nach einem der Ansprüche 1 bis 3, wobei in der Auswerteeinheit mehrere Auswertefenster (12a - 12d) generiert werden.

5. Optischer Sensor nach Anspruch 4, wobei benachbarte Auswertefenster (12a - 12e) teilweise überlappend oder in Abstand zueinander angeordnet sind.

6. Optischer Sensor nach einem der Ansprüche 4 bis 5, wobei die Anzahl der Positionen und die Dimensionierungen von Auswertefenstern (12a - 12e) parametrierbar sind.

7. Optischer Sensor nach einem der Ansprüche 1 bis 6, wobei die Positionen der Auswertefenster (12a - 12e) nachführbar sind.

8. Optischer Sensor nach einem der Ansprüche 4 bis 7, wobei in der Auswerteeinheit logische Verknüpfungen von binären Zustandsinformationen einzelner Auswertefenster (12a - 12e) zur Generierung von Ausgangsgrößen durchführbar sind.

9. Optischer Sensor nach einem der Ansprüche 1 bis 7, wobei die binären Zustandsinformationen von Auswertefenstern (12a - 12e) Ausgabegrößen bilden.

10. Optischer Sensor nach einem der Ansprüche 1 bis 9, wobei innerhalb eines Auswertefensters (12a- 12e) einzelne Objektpunkte ausgewertet werden.

11. Optischer Sensor nach einem der Ansprüche 1 bis 9, wobei innerhalb eines Auswertefensters (12a - 12e) nur aufeinander folgende Objektpunkte zur Bestimmung von Objektkonturen ausgewertet werden.

12. Optischer Sensor nach einem der Ansprüche 10 oder 11, wobei als zusätzliche Information durch eine Amplituden-bewertung von Empfangssignalen von Empfangselementen Remissionswerte für einzelne Objektpunkte bestimmt werden.

13. Optischer Sensor nach einem der Ansprüche 1 bis 12, wobei zur Generierung einer binären Zustandsinformation für ein Auswertefenster (12a - 12e) mehrere aufeinander folgende Messungen herangezogen werden.

14. Optischer Sensor nach einem der Ansprüche 1 bis 13, wobei innerhalb wenigstens eines Auswertefensters (12a - 12e) Messwertschwankungen erfassbar sind, und dass in Abhängigkeit hiervon eine Fehler- oder Warnmeldung generierbar ist.

15. Optischer Sensor nach einem der Ansprüche 1 bis 14, wobei die mit dem Sender (3) durchgeführte Belichtung nur in Abhängigkeit der innerhalb des oder der Auswertefenster (12a - 12e) liegenden Empfangssignale der Empfangselemente gesteuert oder geregelt ist.

## Claims

1. Optical sensor (1) comprising a transmitter unit emitting light beams (2), a receiver (8), which comprises a matrix-shaped arrangement of receiving elements, wherein the projection of the light beams (2) onto an object structure to be detected forms a light (5) of light which is imaged on the receiver (8), and an evaluating unit in which through evaluation of the received signals of the receiving elements in accordance with the triangulation principle a distance profile of the object structure, i.e. individual height values z in dependent on the position x in longitudinal direction of the line (5) of light, is determinable, **characterised in that** at least one evaluation window (12a), which in one direction has a local region extending along the line (5) of light in x direction and in a second direction has a distance region in z direction, is generated in the evaluating unit, and an item of binary state information is generated by evaluation of the number of object points falling into the evaluation window.

2. Optical sensor according to claim 1, wherein the item of binary state information adopts a first state "1" if the number of object points falling into the evaluation window (12a - 12e) is greater than a switch-on number and the item of binary state information adopts a second state "0" is the number of object points falling into the valuation window (12a - 13e) is smaller than a switch-off number.

3. Optical sensor according to claim 2, wherein the switch-on number and the switch-off number form settable parameter values.

4. Optical sensor according to any one of claims 1 to 3, wherein several evaluation windows (12a - 12d) are generated in the evaluating unit.

5. Optical sensor according to claim 4, wherein adjacent evaluation windows (12a - 12e) are arranged to be partly overlapping or at a spacing from one another.

6. Optical sensor according to one of claims 4 and 5, wherein the number of the positions and the dimensions of evaluation windows (12a - 12e) are parameterisable.

7. Optical sensor according to one of claims 1 to 6, wherein the positions of the evaluation windows (12a - 12e) are adjustable.

8. Optical sensor according to any one of claims 4 to 7, wherein logical linkings of items of binary state information of individual evaluation windows (12a - 12e) are performable in the evaluating unit for generation of output magnitudes.

9. Optical sensor according to any one of claims 1 to 7, wherein the items of binary state information of evaluation windows (12a - 12e) form output magnitudes.

10. Optical sensor according to any one of claims 1 to 9, wherein individual object points are evaluated within an evaluation window (12a - 12e).

11. Optical sensor according to any one of claims 1 to 9, wherein only successive object points are evaluated within an evaluation window (12a - 12e) for determination of object contours.

12. Optical sensor according to one of claims 10 and 11, wherein remission values for individual object points are determined as an additional item of information by an amplitude evaluation of received signals of receiving elements.

13. Optical sensor according to any one of claims 1 to 12, wherein several successive measurements are utilised for generation of an item of binary state information for an evaluation window (12a - 12e).

14. Optical sensor according to any one of claims 1 to 13, wherein measurement value fluctuations are detectable within at least one evaluation window (12a - 12e) and a fault report or warning report can be generated in dependence thereon.

15. Optical sensor according to any one of claims 1 to 14, wherein the exposure performed by the transmitter (3) is controlled or regulated only in dependence on the received signals, which lie within the evaluation window or windows (12a - 12e), of the receiving elements.

## Revendications

1. Capteur optique (1) avec une unité d'émission émettant des rayons lumineux (2), avec un récepteur (8) qui présente une disposition en matrice d'éléments de réception, la projection des rayons lumineux (2) sur une structure d'objet à détecter formant une ligne lumineuse (5) qui est reproduite sur le récepteur (8), et avec une unité d'évaluation dans laquelle un profil de distance de la structure d'objet, c'est-à-dire des valeurs de hauteur individuelles z en fonction de la position x en direction longitudinale de la ligne lumineuse (5), peut être déterminé selon le principe de la triangulation par évaluation des signaux de réception des éléments de réception, **caractérisé en ce qu'**au moins une fenêtre d'évaluation (12a) est générée dans l'unité d'évaluation, laquelle fenêtre d'évaluation (12a) comprend, dans une direction, une plage locale s'étendant le long de la ligne lumineuse (5) dans la direction x et, dans une deuxième direction, une plage de distance dans la direction z, et une information d'état binaire étant générée par évaluation du nombre de points d'objet tombant dans la fenêtre d'évaluation (12a).

2. Capteur optique selon la revendication 1, dans lequel l'information d'état binaire prend un premier état « 1 » si le nombre de points d'objet tombant dans la fenêtre d'évaluation (12a - 12e) est supérieur à un nombre d'activation, et l'information d'état binaire prend un deuxième état « 0 » si le nombre de points d'objet tombant dans la fenêtre d'évaluation (12a - 12e) est inférieur à un nombre de désactivation.

3. Capteur optique selon la revendication 2, dans lequel le nombre d'activation et le nombre de désactivation constituent des valeurs paramétriques réglables.

4. Capteur optique selon une des revendications 1 à 3, dans lequel plusieurs fenêtres d'évaluation (12a - 12d) sont générées dans l'unité d'évaluation.

5. Capteur optique selon la revendication 4, dans lequel des fenêtres d'évaluation (12a - 12e) voisines sont disposées avec recouvrement partiel ou à distance l'une de l'autre.

6. Capteur optique selon une des revendications 4 à 5, dans lequel le nombre de positions et le dimensionnement des fenêtres d'évaluation (12a - 12e) sont paramétrables.

7. Capteur optique selon une des revendications 1 à 6, dans lequel les positions des fenêtres d'évaluation (12a - 12e) sont réajustables.

8. Capteur optique selon une des revendications 4 à 7, dans lequel des combinaisons logiques d'informations d'état binaires de fenêtres d'évaluation (12a - 12e) individuelles sont réalisables dans l'unité d'évaluation pour générer des grandeurs de sortie.

9. Capteur optique selon une des revendications 1 à 7, dans lequel les informations d'état binaires de fenêtres d'évaluation (12a - 12e) constituent des grandeurs de sortie.

10. Capteur optique selon une des revendications 1 à 9, dans lequel des points d'objet individuels sont évalués à l'intérieur d'une fenêtre d'évaluation (12a - 12e).

11. Capteur optique selon une des revendications 1 à 9, dans lequel seuls des points d'objet successifs sont évalués à l'intérieur d'une fenêtre d'évaluation (12a - 12e) pour déterminer des contours d'objet.

12. Capteur optique selon une des revendications 10 ou 11, dans lequel des valeurs de
réflexion pour des points d'objet individuels sont déterminées en tant qu'information supplémentaire par une évaluation de l'amplitude des signaux de réception d'éléments de réception.

13. Capteur optique selon une des revendications 1 à 12, dans lequel plusieurs mesures successives sont utilisées pour générer une information d'état binaire pour une fenêtre d'évaluation (12a - 12e).

14. Capteur optique selon une des revendications 1 à 13, dans lequel des variations de valeurs mesurées peuvent être détectées à l'intérieur d'au moins une fenêtre d'évaluation (12a -12e), et un message d'erreur ou d'avertissement peut être généré en fonction de cela.

15. Capteur optique selon une des revendications 1 à 14, dans lequel l'exposition effectuée avec l'émetteur (3) est commandée ou régulée seulement en fonction des signaux de réception des éléments de réception situés à l'intérieur de la ou des fenêtre(s) d'évaluation (12a - 12e).
